# EUROPEAN PATENT SPECIFICATION

(11) **EP 2 102 539 B1**
(45) Date of publication and mention of the grant of the patent: **03.10.2012**
(21) Application number: 07746824.7
(22) Date of filing: 01.06.2007
(51) Int. Cl.: F16L 23/00

(54) **DOUBLE-WALLED CORRUGATED STEEL PIPE**
DOPPELWANDIGES GEWELLTES STAHLROHR
TUYAU EN ACIER ONDULE A DOUBLE PAROI

(30) Priority: 04.01.2007 KR 20070001046
(43) Date of publication of application: 23.09.2009
(73) Proprietor: Dong Won Steel Co., Ltd., Jeollanam-do 542-822 (KR)
(72) Inventor: LEE, Jang-sub, Seoul 158-070 (KR)
(74) Representative: McCarthy, Denis Alexis
(86) International application number: PCT/KR2007/002677
(87) International publication number: WO 2008/082040

(56) References cited:
- JP-A- 08 267 602
- KR-A- 950 006 299
- KR-A- 20040 049 948
- KR-Y1- 200 389 344
- US-A- 6 086 110

## Description

### Technical Field

The present invention relates to a corrugated steel pipe with a double structure, and more particularly, to a corrugated steel pipe with a double structure, which can more conveniently dispose a smooth-walled plastic pipe in a corrugated steel pipe to provide a simple construction and conveniently assembling corrugated steel pipes while simultaneously improving a coupling force and a sealing force.

### Background Art

Underground pipes include a concrete pipe and a cast iron pipe. Although such concrete pipes including concrete hume pipes or cast iron pipes can bear a heavy load or an earth pressure, the heaviness and the high volume of the concrete pipes or the cast iron pipes makes transport, construction, and demolition difficult. In addition, since the quality of concrete depends on the curing condition of the concrete, a poor curing condition such as winter causes defective products.

To address these limitations, corrugated steel pipes are applicable to various applications including carrying sewage, supplying municipal and industrial water, and manufacturing concrete void forms and chutes in the construction field. Recently, because of labor shortages, cost increase, and environmental pollution in drain pipe construction, the corrugated steel pipes are considered as substitutes for typical concrete pipes, which provide high external strength, durability, structural reliability, economy, and convenient construction.

However, since such a corrugated steel pipe includes a spiral that is disposed in a circumferential direction and normal to a flow direction of a fluid in the corrugated steel pipe, the spiral restricts the general flow of the fluid. Also, such a corrugated steel pipe is formed of steel and usually in contact with a fluid, thus causing corrosion that reduces the lifetime of the pipe.

In addition, a coupling member for coupling corrugated steel pipes is a soft packing member that is pressed on the outer circumferences of the pipes to provide a coupling force and a sealing force. Since the soft packing member is just pressed on the outer circumferences of the pipes, pipe construction is poor and the number of processes is increased, thus causing the cost increase in construction.

To address these limitations, Korean Patent Laid-Open Publication No. 2004-0049948, entitled "DOUBLE LAY PIPE AND MANUFACTURING METHOD THEREOF", filed on June 14, 2004 discloses a double lay pipe including a corrugated steel pipe, a smooth-walled plastic pipe inserted into the corrugated steel pipe, and an adhesive resin filler filled between the smooth-walled plastic pipe and the corrugated steel pipe. The double lay pipe can improve structural reliability to protect the double lay pipe from an external damage and improve the flow of a fluid therein, thus preventing corrosion.

However, it is actually difficult to fill the adhesive resin filler between the smooth-walled plastic pipe and the corrugated steel pipe. Also, even when the corrugated steel pipe is formed while the filler is simultaneously formed on the corrugated steel pipe, processing of the filler is difficult. Furthermore, curing causes shrinkage in the filler, thus isolating the filler from the corrugated steel pipe. Also, it is difficult to couple the corrugated steel pipes, thus decreasing productivity.

### Disclosure of Invention

### Technical Problem

The present invention has been made in an effort to solve the above-described problems of the related art. An object of the present invention is to provide a corrugated steel pipe having a double structure, which can achieve simple and rapid construction by more conveniently providing a smooth-walled plastic pipe in a corrugated steel pipe, thereby reducing costs and increasing production. Furthermore, the corrugated steel pipes, each including the smooth-walled plastic pipe, are more conveniently coupled to each other while simultaneously improving a coupling force and a sealing force.

### Technical Solution

To achieve the objects of the present invention, there is provided a pipe including a corrugated steel pipe having a predetermined length, an inner circumference on which a spiral protruding portion is formed, and an outer circumference on which a spiral protruding portion is formed, and a smooth-walled plastic pipe inserted into the corrugated steel pipe and coupled to the corrugated steel pipe through a coupling member, characterized in that the coupling member includes: a fixing plate (30) coupled to each both end portions of the corrugated steel pipe (10) and protruding a predetermined height, the corrugated steel pipe (10) including a wing portion (16) having an inclined cross-sectional shape, the fixing plate (30) including an inclined surface (32) tightly pressed on an inner circumference of the wing portion (16) and a horizontal surface (33) provided on a portion of the inclined surface (32) for forming an acute angle with respect to the inclined surface (32), the horizontal surface (33) coupled to an end outer circumference of the smooth-walled plastic pipe (20); a fixing element (40) including one portion tightly pressed on a protruding portion (34) provided on the other portion of the inclined surface (32) for forming an obtuse angle with respect to the inclined surface (32), and the other portion tightly pressed on an outer circumference of the wing portion (16); and an adhesive resin (50) filled in the fixing element (40) for coupling the corrugated steel pipe (10) and the smooth-walled plastic pipe (20).

The corrugated steel pipe (10) may include both end outer circumferences on which a ring-shaped flange (45) tightly pressed on the fixing element (40) is each provided, a plurality of coupling holes (46) are spaced a predetermined distance from each other in a fringe of the flange (45), and the corrugated steel pipe (10) is coupled using bolts passing through the coupling holes (46).

The flange (45) may have a cross-sectional shape of an inverted U to surround a protruding surface (14) of a corrugated portion (12), one end portion tightly pressed on a recessed surface (13) of the corrugated portion (12), and one side tightly pressed on the fixing element (40).

### Brief Description of the Drawings

FIG. 1 is a partial enlarged view illustrating a corrugated steel pipe coupled with a smooth-walled plastic pipe according to an embodiment of the present invention.

FIG. 2 is a partial enlarged view illustrating corrugated steel pipes coupled with each other according to an embodiment of the present invention.

### Best Mode for Carrying Out the Invention

Hereinafter, a corrugated steel pipe having a double structure according to the present invention will now be described with reference to the accompanying drawing.

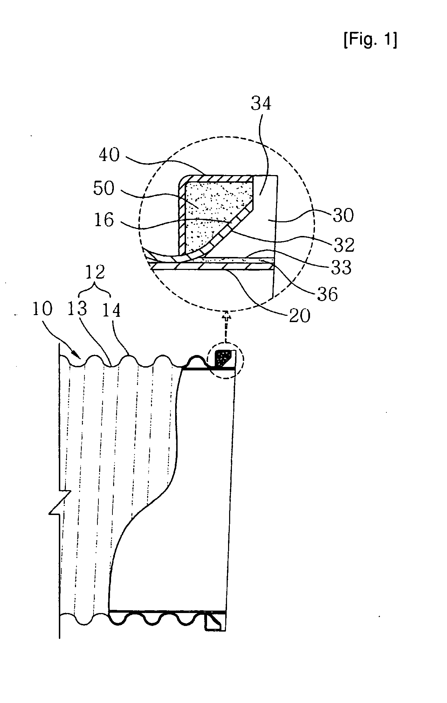

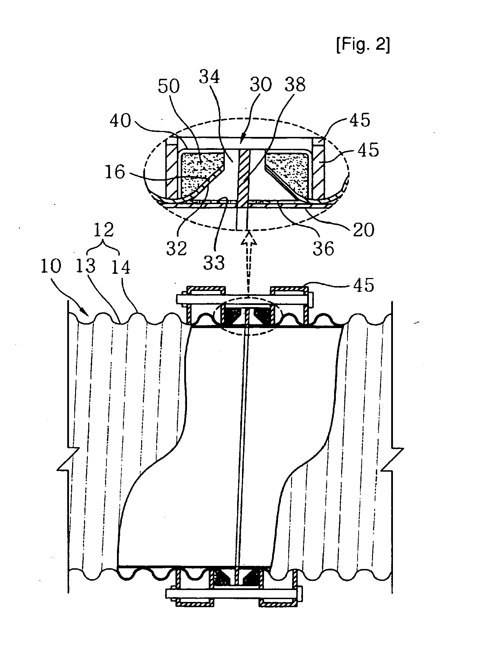

FIG. 1 is a partial enlarged view illustrating a corrugated steel pipe 10 coupled with a smooth-walled plastic pipe according to an embodiment of the present invention. FIG. 2 is a partial enlarged view illustrating the corrugated steel pipe 10 coupled according to the embodiment of the present invention.

Referring to FIGs. 1 and 2, a pipe with a double structure of the present invention includes the corrugated steel pipe 10 having a predetermined length, an inner circumference on a spiral protruding portion is formed, and an outer circumference on a spiral protruding portion is formed, a smooth-walled plastic pipe 20 inserted into the corrugated steel pipe 10 and having an outer diameter corresponding to an inner diameter of the corrugated steel pipe 10, and a coupling member configured to couple the smooth-walled plastic pipe 20 to the corrugated steel pipe 10.

The coupling member includes a fixing plate 30 coupled to the smooth-walled plastic pipe 20 and protruding a predetermined height from each end portion of the corrugated steel pipe 10, a fixing element 40 configured to tightly couple the fixing plate to the corrugated steel pipe 10, and an adhesive resin 50 filling in the fixing element 40 for coupling the corrugated steel pipe 10 and the smooth-walled plastic pipe 20.

A fixing plate 30 including an inclined surface 32 and a horizontal surface 33, protrudes from each end portion of the smooth-walled plastic pipe 20. The inclined surface 32 is tightly pressed on an inner circumference of a wing portion 16 of the corrugated steel pipe 10. The wing portion 16 has an inclined cross-sectional shape. The horizontal surface 33 is formed on a portion of the inclined surface 32 to form an acute angle with respect to the inclined surface 32, and coupled to the end portion of the smooth-walled plastic pipe 20 through an adhesive resin 36.

The fixing element 40 for coupling the fixing plate 30 to the corrugated steel pipe 10, includes two portions. The fixing element 40 has a cross-sectional shape with a bent middle portion such as a quarter circle shape or an L shape such that one portion of the fixing element 40 is tightly pressed on a protruding portion 34 formed on the other portion of the inclined surface 32 for forming an obtuse angle with respect to the inclined surface 32, and the other portion of the fixing element 40 is tightly pressed on an outer circumference of the wing portion 16.

The corrugated steel pipe 10 includes each end portion having an outer circumference on which a ring-shaped flange 45 tightly pressed on the fixing element 40 may be provided. A plurality of coupling holes 46 are spaced a predetermined distance from each other in a fringe of the flange 45, and the corrugated steel pipe 10 is coupled using bolts passing through the coupling holes 46.

The flange 45 has a cross-sectional shape of an inverted U to surround a protruding surface 14 of a corrugated portion 12, an end portion tightly pressed on a recessed surface 13 of the corrugated portion 12, and one side tightly pressed on the fixing element 40. When the pipe of the present invention is provided in duplicate and the flanges 45 are assembled, an elastic ring-shaped packing member 38 may be provided between the fixing plates 30 to improve a sealing force, thereby preventing the leakage of a fluid.

Alternatively, the fixing plate 30 may be formed of plastic to prevent the leakage of a fluid without using the packing member 38.

The smooth-walled plastic pipe 20 includes a cylindrical smooth-walled pipe formed after performing one of a heat-welding process and a high frequency-welding process on each of a plurality of plastic plates having a predetermined length. It is convenient and economic to manufacture the smooth-walled plastic pipe 20.

The configuration and the effects of the present invention will now be described.

The corrugated steel pipe 10 with a predetermined diameter is prepared, and then the smooth-walled plastic pipe 20 is inserted into the corrugated steel pipe 10. In here, the smooth-walled plastic pipe 20 has the outer diameter corresponding to the inner diameter of the corrugated steel pipe 10. Then, the horizontal surfaces 33 are coupled to the outer circumferences in the both end portion of the smooth-walled plastic pipe 20 through the adhesive resin 36.

Thereafter, the fixing element 40 is coupled to the protruding portion 34 of the fixing plate 30 and the outer circumference of the wing portion 16 of the corrugated steel pipe 10, and then the adhesive resin 50 is filled in the filling element 40.

When the pipe of the present invention is provided in duplicate, the flanges 45 provided on the outer circumference of the corrugated steel pipe 10 are used to couple the corrugated steel pipes 10 to each other. The end portion of the flange 45 is tightly pressed on the recessed surface 13 of the corrugated portion 12 such that the flange 45 surrounds the protruding surface 14 of the corrugated portion 12 of the corrugated steel pipes 10, and then the flanges 45 are coupled using bolts.

When the flanges 45 are coupled to each other, the packing member 38 is provided between the fixing plates 30 to prevent the leakage of a fluid.

Therefore, the smooth-walled plastic pipe 20 can increase the durability of the corrugated steel pipe 10, prevent the breakage of the corrugated steel pipe 10, improve a flow of a fluid therein, and prevent the fluid from contacting the corrugated steel pipe 10, thereby increasing the lifetime of the corrugated steel pipe 10.

### Industrial Applicability

As described above, according to the present invention, the smooth-walled plastic pipe is more conveniently provided in the corrugated steel pipe, thereby achieving simple and rapid construction, reducing costs, and increasing production. Furthermore, the corrugated steel pipes, each including the smooth-walled plastic pipe, are conveniently coupled to each other while simultaneously improving a coupling force and a sealing force.

## Claims

1. A pipe including a corrugated steel pipe (10) having a predetermined length, an inner circumference on which a spiral protruding portion is disposed, and an outer circumference on which a spiral protruding portion is disposed, and a smooth-walled plastic pipe (20) inserted into the corrugated steel pipe (10) and coupled to the corrugated steel pipe (10) through a coupling member, **characterized in that** the coupling member comprises:
a fixing plate (30) coupled to each end portion of the corrugated steel pipe (10) and protruding a predetermined height, the corrugated steel pipe (10) including a wing portion (16) having an inclined cross-sectional shape, the fixing plate (30) including an inclined surface (32) tightly pressed on an inner circumference of the wing portion (16) and a horizontal surface (33) provided on a portion of the inclined surface (32) for forming an acute angle with respect to the inclined surface (32), the horizontal surface (33) coupled to an end outer circumference of the smooth-walled plastic pipe (20);
a fixing element (40) including one portion tightly pressed on a protruding portion (34) provided on the other portion of the inclined surface (32) for forming an obtuse angle with respect to the inclined surface (32), and the other portion tightly pressed on an outer circumference of the wing portion (16); and
an adhesive resin (50) filled in the fixing element (40) for coupling the corrugated steel pipe (10) and the smooth-walled plastic pipe (20).

2. The pipe of claim 1, wherein the corrugated steel pipe (10) comprises both end outer circumferences on which a ring-shaped flange (45) tightly pressed on the fixing element (40) is each provided, a plurality of coupling holes (46) are spaced a predetermined distance from each other in a fringe of the flange (45), and the corrugated steel pipe (10) is coupled using bolts passing through the coupling holes (46).

3. The pipe of claim 2, wherein the flange (45) has a cross-sectional shape of an inverted U to surround a protruding surface (14) of a corrugated portion (12), one end portion tightly pressed on a recessed surface (13) of the corrugated portion (12), and one side tightly pressed on the fixing element (40).

4. The pipe of any one of claims 1 through 3, wherein the smooth-walled plastic pipe (20) comprises a smooth-walled pipe having a cylindrical shape after performing one of a heat-welding process and a high frequency-welding process on each of plastic plates having a predetermined length.

## Patentansprüche

1. Rohr, enthaltend ein Wellstahlrohr (10) mit einer vorab definierten Länge, einem inneren Umfang, auf dem ein spiralförmiger vorstehender Abschnitt vorgesehen ist, und einem äußeren Umfang, auf dem ein spiralförmiger vorstehender Abschnitt vorgesehen ist, und ein glattwandiges Kunststoffrohr (20), das in das Wellstahlrohr (10) eingesetzt und über ein Verbindungselement mit dem Wellstahlrohr (10) verbunden ist, **dadurch gekennzeichnet, dass** das Verbindungselement umfasst:
eine Befestigungsplatte (30), die mit jedem Endabschnitt des Wellstahlrohrs (10) verbunden ist und um eine vorab definierte Höhe vorsteht, wobei das Wellstahlrohr (10) einen Flügelabschnitt (16) mit einer geneigten Querschnittsform enthält, wobei die Befestigungsplatte (30) eine geneigte Fläche (32), die eng an einem inneren Umfang des Flügelabschnitts (16) anliegt, und eine horizontale Fläche (33) enthält, die auf einem Abschnitt der geneigten Fläche (32) vorgesehen ist, um einen spitzen Winkel in Bezug auf die geneigte Fläche (32) zu bilden, wobei die horizontale Fläche (33) mit einem äußeren Endumfang des glattwandigen Kunststoffrohrs (20) verbunden ist;
ein Befestigungselement (40), das einen Abschnitt enthält, der eng an einem vorstehenden Abschnitt (34) anliegt, der auf dem anderen Abschnitt der geneigten Fläche (32) vorgesehen ist, um einen stumpfen Winkel in Bezug auf die geneigte Fläche (32) zu bilden, und wobei der andere Abschnitt eng an einem äußeren Umfang des Flügelabschnitts (16) anliegt; und
ein Klebeharz (50), das in das Befestigungselement (40) gefiillt ist, um das Wellstahlrohr (10) und das glattwandige Kunststoffrohr (20) zu verbinden.

2. Rohr nach Anspruch 1, wobei das Wellstahlrohr (10) beide äußere Endumfänge umfasst, auf denen ein ringförmiger Flansch (45) jeweils eng am Befestigungselement (40) anliegend vorgesehen ist, wobei eine Mehrzahl von Verbindungslöchern (46) mit einem vorab definierten Abstand voneinander in einem Rand des Flanschs (45) beabstandet ist, und wobei das Wellstahlrohr (10) mithilfe von Bolzen verbunden ist, die durch die Verbindungslöcher (46) geführt sind.

3. Rohr nach Anspruch 2, wobei der Flansch (45) eine Querschnittsform eines umgedrehten U aufweist, um eine vorstehenden Fläche (14) eines Wellabschnitts (12) zu umgeben, wobei ein Endabschnitt eng auf einer ausgenommenen Fläche (13) des Wellabschnitts (12) anliegt und eine Seite eng am Befestigungselement (40) anliegt.

4. Rohr nach einem der Ansprüche 1 bis 3, wobei das glattwandige Kunststoffrohr (20) ein glattwandiges Rohr enthält, das nach Durchführung von einem eines Heißschweißverfahrens und eines Hochfrequenzschweißverfahrens an jeder von Kunststoffplatten mit einer vorab definierten Länge eine zylindrische Form aufweist.

## Revendications

1. Tuyau comprenant un tuyau en acier ondulé (10) ayant une longueur prédéterminée, une circonférence intérieure sur laquelle est disposée une partie en saillie spiralée et une circonférence extérieure sur laquelle est disposée une partie en saillie spiralée, et un tuyau en plastique à paroi lisse (20) introduit dans le tuyau en acier ondulé (10) et accouplé au tuyau en acier ondulé (10) par le biais d'un élément d'accouplement, **caractérisé en ce que** l'élément d'accouplement comprend :
une plaque de fixation (30) couplée à chaque partie d'extrémité du tuyau en acier ondulé (10) et dépassant d'une hauteur prédéterminée, le tuyau en acier ondulé (10) comprenant une partie d'ailette (16) ayant une section transversale de forme inclinée, la plaque de fixation (30) comprenant une surface inclinée (32) étroitement comprimée sur une circonférence intérieure de la partie d'ailette (16) et une surface horizontale (33) prévue sur une partie de la surface inclinée (32) de façon à former un angle aigu par rapport à la surface inclinée (32), la surface horizontale (33) étant couplée à une circonférence extérieure de l'extrémité du tuyau en plastique à paroi lisse (20) ;
un élément de fixation (40) comprenant une partie étroitement comprimée sur une partie en saillie (34) prévue sur l'autre partie de la surface inclinée (32) de façon à former un angle obtus par rapport à la surface inclinée (32), tandis que l'autre partie est étroitement comprimée sur une circonférence extérieure de la partie d'ailette (16) ; et
une résine adhésive (50) remplissant l'élément de fixation (40) afin de coupler le tuyau en acier ondulé (10) et le tuyau en plastique à paroi lisse (20).

2. Tuyau selon la revendication 1, dans lequel le tuyau en acier ondulé (10) comprend deux circonférences extérieures d'extrémité sur chacune desquelles est prévue une collerette de forme annulaire (45) étroitement comprimée sur l'élément de fixation (40), une pluralité de trous d'accouplement (46) sont espacés d'une distance prédéterminée les uns des autres dans une bordure de la collerette (45) et le tuyau en acier ondulé (10) est couplé en utilisant des boulons passés dans les trous d'accouplement (46).

3. Tuyau selon la revendication 2, dans lequel la collerette (45) a une section transversale en forme de U inversé de façon à entourer une surface en saillie (14) d'une partie ondulée (12), une partie d'extrémité étroitement comprimée sur une surface en creux (13) de la partie ondulée (12) et un côté étroitement comprimé sur l'élément de fixation (40).

4. Tuyau selon l'une quelconque des revendications 1 à 3, dans lequel le tuyau en plastique à paroi lisse (20) comprend un tuyau à paroi lisse ayant une forme cylindrique après qu'une opération choisie parmi un procédé de soudage thermique et un procédé de soudage à haute fréquence a été réalisée sur chacune des plaques en plastique ayant une longueur prédéterminée.
